# EUROPEAN PATENT APPLICATION

(11) **EP 3 488 922 A1**
(43) Date of publication of application: **29.05.2019**
(21) Application number: 17830540.5
(22) Date of filing: 18.07.2017
(51) Int. Cl.: B01J 8/04, F28C 3/12

(54) **SYSTEM FOR THE RECOVERY OF HEAT IN THERMAL PROCESSES BY MEANS OF THE SEQUENTIAL AND ALTERNATING OPERATION OF A SET OF PACKED BEDS WITH NON-ABSORBENT MATERIALS**

(30) Priority: 21.07.2016 ES 201630950 U; 23.10.2016 ES 201631265 U
(71) Applicant: Seenso Renoval S.L., 28040 Madrid (ES)
(72) Inventor: AJONA MAEZTU, Jose Ignacio, 28040 Madrid (ES)
(86) International application number: PCT/ES2017/070519
(87) International publication number: WO 2018/015600

(57) **Abstract**

This is system for heat recovery in thermal processes using sequential and reciprocating action of a set of packed beds with non-adsorbent materials (or in which the adsorption does not have a dominant effect). It can be used in multiple applications (drying, desalination, absorption cooling, generation of mechanical powers, etc.), which are different from each other but which share the same principle: applied or generated heat in a device (1) (which can also be a packed bed) is captured and recovered through packed beds which sequentially switch their roles: while one bed (2) collects the residual heat from the first device (1), the second (3) pre-heats the fluid which it delivers to the first device (or to another process) using residual heat which it had collected previously; and when the collector bed (2) reaches the highest set level, it uses coupled valves to switch roles with the pre-heating bed (3), and vice versa.

## Description

### TECHNOLOGY SECTOR

Energy efficiency of heat processes: Desalination, drying, distillation, water treatment, absorption air conditioning and mechanical power generation.

### BACKGROUND OF THE INVENTION

Achieving sustainable development on our planet is probably one of the most important objectives that we have as a species. One of the challenges posed by this goal is the development of sustainable, energy-efficient technologies with a low economic and environmental impact.

In the wide range of processes of using thermal energy to transform natural resources to obtain electrical power, drinking water, and food, to air condition buildings, etc., heat recovery systems for subsequent use are being used with great abundance to increase energy efficiency. There are currently a large number of procedures to do this. The most efficient systems not only recover a good part of the energy provided, they also do not excessively reduce the heat level of the energy used, allowing the recoverable energy to be used for the same process or for another. This need for usable recoverable energy tends to be associated with the thermal starting temperature being high enough to enable the process (e.g. using the maximum temperature of the materials) and the associated costs. Examples of this are
- The combined cycle for electricity production
- Water desalination with thermal technologies
- The drying of products
- Double-effect absorption machines

The different methods use heat recovery systems to increase energy efficiency in the process are described in a multitude of documents. As an example, we can cite
- On producing electricity through thermal procedures: "Combined Heating, Cooling & Power Handbook: Technologies & Applications", Neil Petchers,2005, The Fairmont Press, ISBN 0-88173-349-0; "A thermodynamic analysis of different options to break 60% electric efficiency in combined cycle power plants" P Chiesa, 2002, ASME Turbo Expo 2002, ISBN: 0-7918-3606-1. On combining with solar thermal systems as a heat source: "Trough integration into power plants-a study on the performance and economy of integrated solar combined cycle systems, J Dersch, et al.; 2004 - Energy Magazine Volume 29, Issues 5-6, Elsevier
- On thermal desalination: "Status of humidification dehumidification desalination technology", G. Prakash Narayan et al, 2011. Proceedings International Desalination Association World Congress 2011 IDAWC/PER11-266 and "Advances in Membrane Distillation for Water Desalination and Purification Applications", 2015. Lucy Mar Camacho et al, Water 2013, 5, 94-196; doi:10.3390/w5010094. On the combination of thermal desalination systems with thermal use systems using solar energy as a heat source: "Solar-Powered Desalination", Emrah Deniz, 2015. Chapter 5 "Desalination Updates", book edited by Robert Y. Ning, ISBN 978-953-51-2189-3;
- On the drying of products: "Drying handbook. Fourth edition", (Arun S. Mujumdar, 2014, CRC Press; ("Energy Efficient Multistage Zeolite Drying for heat Sensitive Products", Mohamed Djaeni , 2008, Doctoral Thesis from the University of Wageningen (Holland); "Energy efficiency in boilers, steam creators, ovens and dryers", Guillermo Escobar et al, chapter 5 of the wikibook on Energy Efficiency, EOI Business School, http://www.eoi.es/wiki/). On the combination with thermal use systems using solar energy as a heat source: "Solar Drying", W. Weiss & J. Buchinger, 2015. Training course within the project "Establishment of a Production, Sales and Consulting Infrastructure for Solar Thermal Plants in Zimbabwe", AEE INTEC -Austria).
- On absorption refrigeration: "Investigation of the potential of application of single effect and multiple effect absorption cooling systems", Gomri 2010; Energy Conversion and Management, Volume 51, Issue 8; Elsevier, and on combining it with solar thermal energy: "Absorption cooling in Spain: Perspectives and outcomes from the simulation of recent installations, Garcia Casals 2006 - Renewable Energy Volume 31, Issue 9, July 2006 Elsevier

The main problems pending in heat recovery include
- Increasing the energy efficiency of the processes
- Maintaining the thermal level of the starting energy in the recovered energy at a competitive cost
- Coupling in residual heat generation systems with intermittent renewables and decoupled demands, at a competitive cost

The system in the invention seeks to help solve these problems

### EXPLANATION OF THE INVENTION

A packed bed is a multi-phase reactor which houses different materials in two or three phases (solid, liquid or gas). Inside of them, chemical reactions may occur or, as in the case of the system in the invention we are currently looking at, phenomena in transferring heat and mass between solids (typically called bed filling) and a heat-carrier fluid (e.g. humid air, liquid water, etc.) which circulates inside and which serves to give or remove energy to or from the solid filling of the bed, depending on the operation mode.

The system in the invention for heat recovery in thermal processes uses the sequential and reciprocating action of a set of packed beds with non-adsorbent materials (or materials in which adsorption does not have a dominant effect) applying, in a new system, the thermal and experimental results of the doctoral thesis by the creator of the system in the invention: "Study on heat exchange between a greenhouse taken as a solar collector of humid air and a bed of rocks as an environmental control system" (Jose Ignacio Ajona Maeztu, Faculty of Physics- Complutense University of Madrid, 1990). In that doctoral thesis, a series of usable results were modelled and tested experimentally, enabling to understand how the system in the invention works. When hot and humid air is introduced through the upper part of a cooler packed bed (in that case, pebbles), with a step jump in the temperature and intake air humidity conditions, the air transfers its heat to the filling in the form of sensible heat and phase change heat, producing condensation of the water contained in the air on the filling, and the following can be observed:
- Even with reduced air flows and speeds, the transfer of heat between the air and the filling is excellent and therefore the temperature of the air and the filling is very similar at inner points of the bed.
- If the relative humidity of the intake air is less than 100% with a wet temperature higher than the initial temperature of the filling, the thermal evolution of the filling demonstrates two clearly different stages. In the first stage, the filling reaches a temperature close to the wet temperature of the intake air and water condensation occurs on the filling, and then the deposited water drains or evaporates. When the water on the filling is exhausted, whether by evaporation or by the movement of liquid water towards the bottom due to gravity, the second phase begins in which the bed progresses from the temperature close to that of the wet temperature of the intake air until reaching the dry temperature of the supply air.

- In the first stage, the thermal wave moves inside the bed at a certain speed, depending on the operating conditions, significantly faster than in the second stage, and the higher the wet temperature is, the faster it goes.
- The liquid water deposited on the filling and which descends to the bottom of the bed due to gravity represented a very significant proportion of the liquid water introduced.
- During the first stage, the evolution of the humid air, shown on the psychrometric diagram, traces the saturation curve until approaching the wet temperature of the intake air

The system in the invention can be used in multiple applications which are different from each other but which share the same principle: applied or generated heat in a device (which can also be a packed bed) is collected and recovered through packed beds with non-adsorbent materials which sequentially switch their roles: while one of the beds collects the residual heat from the first device, the second pre-heats the fluid which it delivers to the first device (or to another process) using the residual heat that it had collected previously; that is to say, when the collector bed reaches the highest set level, using a system of synchronized valves, it switches its role with the pre-heating bed, and vice versa. The majority of the applications of the system in the invention have a capacity for recovering over 80% of the residual heat produced. A common characteristic of all the applications is that in the system in the invention, packed beds are used with a solid, not particularly adsorbent filling material with physical properties such that the product of its specific heat value, its density and of the void fraction occupied by the solid in the bed is greater than 200 kilojoules per degree centigrade and cubic metre (kJ/C/m3) and can surpass 3000 kJ/C/m³.

In order to better understand the system in the invention, we are going to explain it in connection with some of its possible applications or uses

### APPLICATION: DRYING OF PRODUCTS

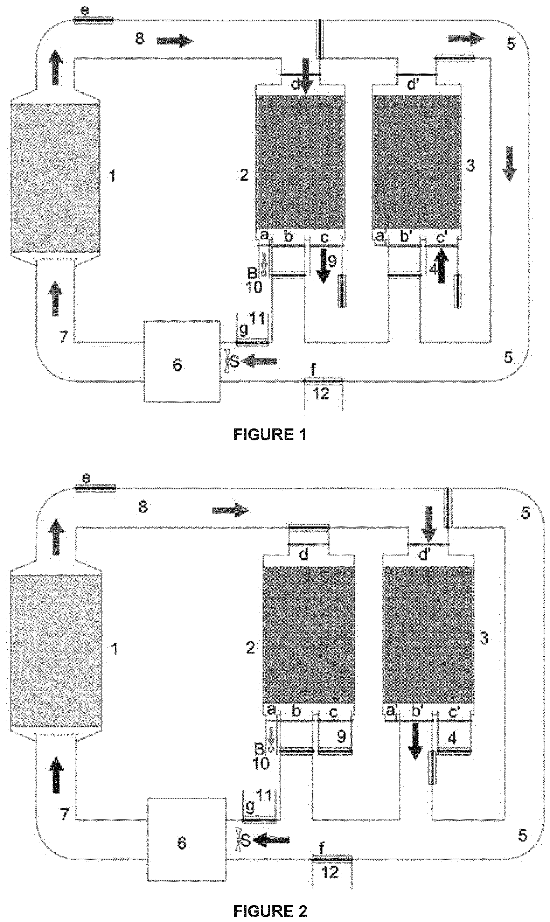

The creator of the invention has published utility model ES1172383U for this application. Figures 1, 2 and 3 show the system in the invention applied to product drying (or to a similar application). The meaning of the numbers in Figures 1, 2 and 3 is
1. Process which generates residual heat both in the form of phase change heat and of sensible heat (e.g.: Dryer in which water vapour is produced)
2. Packed bed with non-adsorbent materials which captures residual heat and transfers it to the filling material (e.g. condensing the water vapour extracted from the dryer)
3. Packed bed with non-adsorbent materials which takes advantage of the enthalpy of the residual heat collected by (2) to pre-heat the fluid that it feeds into (1) or other equipment
4. Entry of fluid into the pre-heater (3), (in operation mode 1 described below)
5. Exit of pre-heated fluid from the pre-heater (3), (in operation mode 1 and 3 described below)
6. Heater of the pre-heated fluid, (in operation mode 1).
7. Entry of fluid into the process (e.g. dryer) (1) (in operation mode 1 and 2)
8. Exit of fluid from the process (1) towards the residual heat collector (2) in operation mode 1 and 3 or towards the pre-heater (3) in operation mode 2, described below
9. Exit of fluid to the exterior, in operation mode 1 and 3, from the residual heat collector (2).
10. Exit of distillate from the residual heat collector (2), if it is produced.
11. Entry of fluid from the exterior to the process (1), (in operation mode 3)
12. Exit of fluid to the outside, in operation mode 3, to the external process for using residual heat.

The fluid used as a heat-carrier fluid in the beds (2) and (3) (e.g. humid air) which has increased its enthalpic level by having previously passed through the process (1), will yield a good part of the enthalpy gained in (1) to circulate through the beds (2) and (3), according to the operation modes described below, and thus recovering the energy contributed (or generated) in the process (1), for the process itself (1) or for other uses. The blower (S) is needed for the circulation of the heat-carrier fluid between the process (1) and the beds (2) and (3), and a heater is needed (6) if it is necessary to heat it before entering in the process (1). Valves or hatches are needed (a), (b), (c) and (d) activated in conjunction with (a'), (b'), (c') and (d') are necessary so that the flow of the heat-carrier fluid can be directed towards the process (1) to the bed (2) or to the bed (3) and so that the flow of the heat-carrier fluid enters the process (1) from the bed (3) or (2). Valves or hatches (e), (f) and (g) are needed in order to allow the entry and exit of fluid from the inside of the system. A pump (B) is needed for the extraction of condensates in the beds (2) or (3)

The system in the invention can function in three different operation modes.

In the first (operation mode 1), the product being processed in (1) (e.g. product being dried) is heated using an external source (6) (boiler, solar installation, etc.) or internal source (chemical reaction) and produces residual heat (e.g. hot and dry air enters the process (1) which evaporates the water from the product being dried and produces hot and wet air) which is transferred by the heat-carrier fluid towards the residual heat collector (2) and towards the pre-heater (3). The fluid from the process (1), at low temperature, enters through (4) to the pre-heater (2) where it is pre-heated before entering the heater (6) through the piping (5) and is entered into the process (1) through the piping (7), producing a fluid with residual heat at the exit (in the case of drying, water vapour is produced, making the air reach an initially quasi-saturated state at a temperature close to that set in the heater, and then with a humidity content which will diminish as the product dries until reaching the humidity of the intake air). The fluid with a high enthalpic content coming from the process (1) through the piping (8) will transfer its enthalpy in contact with the filling material of the residual heat collector (2)
- In the case of drying, the heat transfer occurs in the same way described before in the cited Thesis and initially traces a trajectory represented in the psychometric diagram, or in the pressure-temperature diagram corresponding to the water vapour to be condensed, on the saturation curve, between a temperature close to that set in the heater (6) and that of the intake air, or treating gas, introduced through (4). The liquid condensed over the filling and which by gravity reaches the bottom of the residual heat collector (2) is extracted from the system through (10). The cooled fluid which exits the residual heat collector (2) is expelled from the system through (9).
- In the case of other processes without the fluid changing phases, the heat transfer will only occur via sensible heat between the heat-carrier fluid and the solid.

In the second operation mode (operation mode 2), it shall enter exclusively when needed to recover the sensible heat of the material on the inside of the process (1), for example, in the case of drying a product when it is already dry to the set levels and at a temperature close to default value set in the heater (6). In this operation mode 2, the heater (6) will switch off, keeping the fluid circulator (S) on to recover the sensible heat of the product and transfer it towards the upper part of the pre-heater (3). The cooled fluid at the exit of the pre-heater (3) enters the process (1) through the piping (7). If the output temperature of the pre-heater is not cold enough to cool the product, cold fluid will be taken, from the outside, for example, adequately positioning (b) and (c), and will be expelled through (e) once opened.

In the third operation mode (operation mode 3), it enters exclusively when needed to use the residual heat generated in the process (1), recovering it for use in a different process from the one in which it was generated (process (1)); for example, in the case of an exothermic process (or process with internal heat-generating sources) which does not need the entering fluid to provide energy and which in many cases is used to cool it. In this operation mode 3, the heater (6) normally will be turned off (since the process (1) generates heat), keeping the fluid circulator (S) on to move the fluid and recover the residual heat of the process (1) in the same way as in operation mode 1: The fluid with a high enthalpic content coming from the process (1) through the piping (8) will transfer its enthalpy in contact with the filling material of the residual heat collector (2), exchanging roles with the pre-heater (3) in the same way and under the same criteria as described in the following paragraph. The difference with operation mode 1 consists in the fact that, in operation mode 3, the fluid enters the system through piping (11) and is directed towards the process (1) and through the piping (4) to be directed through the piping (12) towards the external use of the enthalpy coming from the pre-heater (3), instead of directing it towards the process (1), the fluid which enters through the piping (11) may be the same or different from that which enters through the piping (4). For this operation mode 3, it is necessary for the hatch (f) to deviate the fluid towards the external process, preventing it from going to the process (1) from the piping (5) and preventing the hatch (g) from being opened to allow the entry of the fluid through (11). The process to which the heat recovered from the process (1) is sent will have all the necessary elements to circulate the fluid passing through.

In operation modes 1 and 3, in which the pre-heater (3) can carry out the function of pre-heating the fluid, this is due to the fact that the residual heat collector (2) and the pre-heater (3) switch their roles when the evolution of the temperature in the lower part of the residual heat collector (2) is such that the amount set as an operation criterion climbs above the temperature of the fluid intake through (4). This change takes place using a set of 3-way hatch valves (or the like) by which the connections (a), (b), (c) and (d) of the residual heat collector (2) switch their function with (a'), (b'), (c') and (d') of the pre-heater (3) and vice versa while the exit hatch (e) of the process remains closed. The movement of fluids takes place, mainly, through the hydraulic group of condensate extraction pumps B, and through the circulator (blower in the case of drying) S, in pipe (5) (it is also possible for it to go in pipe (8)) to circulate the fluid between the pre-heater (3), the dryer (1) and the residual heat collector (2). When the switch occurs, the new pre-heater is in the same condition that the residual heat collector was in previously, with a temperature in the upper part close to that set in the heater (6) and a temperature in the lower part close to that of the fluid intake through (4) which it can pre-heat, transferring its heat to the entering fluid. In the same way, the new residual heat collector is in the same conditions that the pre-heater was in previously, which has been thermally discharging after being cooled through the passage of supply fluid to the system, with a temperature in the lower part close to that of the fluid intake through (4) from which, in operation modes 1 and 3, it may efficiently recover the residual heat coming from the process (1) while recovering the sensible heat from the processed product, in the second operation mode. This switching of roles is one of the most noteworthy elements of the system in the invention. It is important to highlight that the role switching between the residual heat collector (2) and the pre-heater (3) takes place during operation modes 1 and 3 the number of times necessary to recover the heat from the process as set as a default, and that operation mode 2 shall be used only to extract the sensible heat from the product once processed in order to use it to process a new product.

The efficiency of the system in the invention, understood to be the ratio between the residual energy recovered from the process (1) using the residual heat collector (2) and the pre-heater (3), and the residual heat generated in (1) is going to mainly depend on
- The default temperature set in the heater (6), or produced by the process itself, and the working pressure: the higher they are, the greater the efficiency.
- During operation modes 1 and 3, the closer the temperatures in the upper part of the residual heat collector (2) and the pre-heater (3) are to that set in the heater (6) (or that produced by the process) and the temperatures of the lower part of the residual heat collector (2) and the pre-heater (3) at the fluid intake through (4): The closer they are, the greater the efficiency.
- The enthalpy at the process output (1): In operation modes 1 and 3, the higher they are, the greater the efficiency, and in operation mode 2, the lower the temperature, the greater the efficiency
- The temperature of the distillate produced (if produced): The lower it is, the greater the efficiency
- The temperature of the product to be processed, once processed: The lower it is, the greater the efficiency.
- The thermal insulation level of the residual heat collector (2) and the pre-heater (3): The better the insulation is, the greater the efficiency of the system

Applying these control guidelines to the working conditions that favour the energy efficiency of the system, the efficiency values reachable in the majority of cases will be above 60%, being able to reach levels above 95% in many cases, so long as the level of thermal insulation is sufficient.

The criterion for designing the beds for efficient performance, taking into account the amount of residual heat produced in the process (1) and the corresponding fluid flows, is therefore:
- Sizing of the residual heat collector (2) and the pre-heater (3) with a sufficient thermal capacity for the role switching of the residual heat collector (2) and pre-heater (3), and vice versa (to occur when the thermal wave caused by the entry of residual heat in the upper part of the residual heat collector (2) starts to reach the lower part of the residual heat collector (2)), to occur with a reasonable frequency (e.g. every 2-3 hours) and to ensure recovery of almost all the residual energy of the process (1).
- Sizing of the beds to guarantee a suitable heat and mass transfer, which depends, among other things, on the speed of the fluid inside the bed.

Even though the system in the invention for this kind of use/application can work with multiple non-adsorbent filling materials (or materials in which adsorption does not have a dominant effect), it is recommended to use materials with a high value of the product of density and specific heat, small fraction of voids, low cost, local availability and resistance to temperature and corrosion. Therefore, the use of rocks (pebbles, granite, etc.) available locally is an excellent (though not the only) choice: It allows you to work at high temperatures and pressures with a very low cost due to which it can be sized extensively in order to work with significant thermal differences between the upper and lower part of the fillings of the residual heat collector (2) and the pre-heater (3)

The bed of the residual heat collector (2) and the pre-heater (3) when it uses, as a filling, materials with which the product of the value of the specific heat, its density, and the void fraction occupied by the solid in the bed is greater than 200 kilojoules per degree centigrade and cubic metre (kJ/C/m³), being able to surpass 3000 kJ/C/m³, in addition to as a residual heat collector (2) or pre-heater (3), it can operate as an energy storage system for heat sources (intermittent or not) which is efficient and, potentially, low cost. This is especially interesting if we want to use solar heat, or other sources of renewable or recovered heat, (on its own or as a main contributor) to provide the energy necessary for the process (it must be taken into account that we can hybridize the solar system with another heat production system using renewables or with conventional fuels to maintain a constant production process, if desired).

It is important to point out that the device in the invention achieves a thermodynamic balance between the fluid flows and the filling of the beds thanks to the coupling between the thermal behaviour of the fluid and the filling, both in the residual heat collector (2) and in the pre-heater (3), due to the good heat transfer achieved and the great thermal stratification between the upper part of the bed and the lower part of the bed, which is increased by using filling materials with a high thermal inertia and low thermal conductivity.

### APPLICATION: DESALINATION OF SEAWATER OR EFFLUENT CONCENTRATION

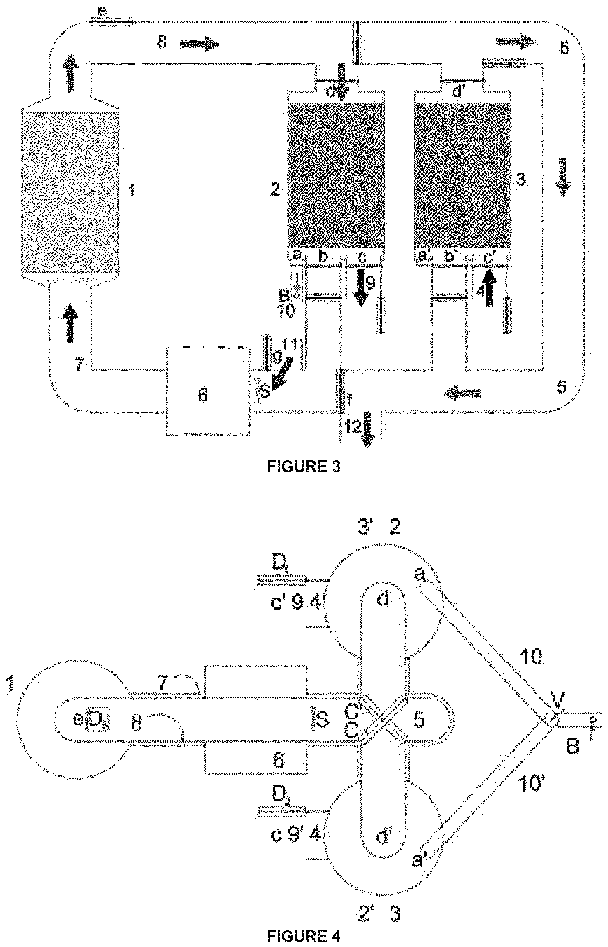

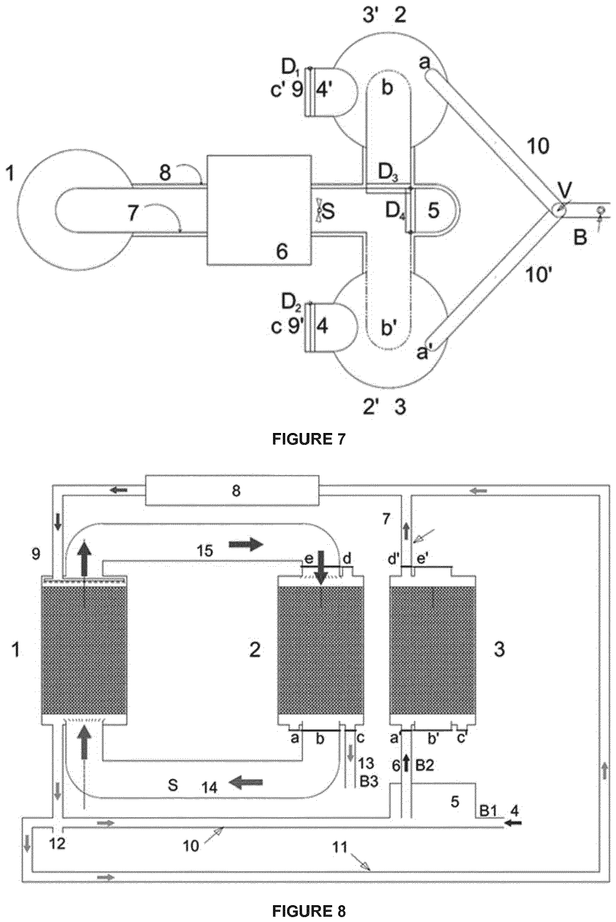

The creator of the invention has published utility model ES1163858Y for this application. Figure 8 shows the system in the invention applied to the desalination of seawater (or a similar application or use). In this application, three (or two) packed beds are used with non-adsorbent materials to carry out the functions of evaporator, condenser and condensation heat recovery unit as shown in Figure 4, where the numbers refer to the different equipment:
1. Evaporator. Residual heat generator both in the form of phase change heat and of sensible heat. Another device other than a packed bed can also be used as an evaporator.
2. Condenser, packed bed collecting residual heat
3. Collected residual heat recovery unit (e.g. in the condenser), packed bed for use as a pre-heater of the evaporator or container. It takes advantage of the enthalpy of the residual heat collected by (2) to pre-heat the fluid that it feeds into (1) or other equipment
4. Entry of salt water or the liquid to be treated
5. Auxiliary tank
6. Entry of the brine, or the solution, into the recovery unit (3)
7. Exit of the preheated brine, or solution, from the recovery unit (3)
8. Heater of the brine, or the solution.
9. Entry of the heated brine, or solution, into the evaporator (1)
10. Brine, or solution, concentrated in the evaporator (1) and sent to the auxiliary tank (4) to restart the cycle passing through the recovery unit (3) and the heater (8)
11. Brine, or solution, concentrated in the evaporator (1) and sent to the heater (8) to be reheated
12. Brine, or solution, concentrated in the evaporator (1) and expelled to the exterior
13. Exit of the distillate from the condenser (2)
14. Piping cool air (or gas) with low water vapour content from the condenser (2) to the evaporator (1)
15. Piping hot air (or gas) with high water vapour content from the evaporator (1) to the condenser (2)

The salt water, or liquid to be treated, at low temperature which enters through (4) into the auxiliary tank (5), enters through (6) into the recovery unit (2) where it is preheated before entering into the heater (8) and being introduced into the upper part of the evaporator (1) spread over the filling, producing water vapour and causing the air (or another gas) to reach an almost saturated state at a temperature close to that set in the heater. The hot air (or another gas) with a high water vapour content coming from the evaporator (1) will lose water vapour and temperature in contact with the filling material of the condenser (2) in the same way described before in the cited Thesis, and will trace a trajectory represented in the psychometric diagram (or in the pressure-temperature diagram corresponding to the water vapour to be condensed) along the saturation curve, between a temperature close to that set in the heater (8) and that of the brine, or liquid to be treated, introduced through (6). The liquid condensed over the filling and which by gravity reaches the bottom of the condenser (2) is extracted from the system through (13). The cooled and concentrated brine (or solution) which exits the evaporator (1) will be directed through (11), (12) or (13) depending on the desired operation mode to, respectively, be reheated, reconcentrated or expelled from the system.

The recovery unit (3) being able to preheat the brine (or solution) is due to the fact that the condenser (2) and the recovery unit (3) switch their roles when the temperature evolution in the lower part of the condenser is such that the amount set as an operation criterion climbs above the intake temperature of the brine (or solution) through (6). This switch is carried out using a set of 3-way hatch valves (or the like) through which the connections (a), (b), (c), (d) and (e) of the condenser (2) switch their function with (a'), (b'), (c'), (d') and (e') of the recovery unit (3). The movement of liquid takes place mainly through the hydraulic groups of pumps: B1 supplying the auxiliary tank (5), B2 supplying the recovery unit (3), and B3 extracting the condensate, and through the blower S, in the pipe (14) to circulate the air (or another gas) with water vapour between the condenser (2) and the evaporator (1). The pump groups B1 and B2 may also be used during the role switching between beds to facilitate the transfer of brine between the pre-heater and the condenser and to improve heat recovery.

When the change occurs, the new recovery unit is in the same condition that the condenser was in previously, with a temperature in the upper part close to that set in the heater (8) and a temperature in the lower part close to that of the liquid intake through (6) which it can pre-heat, transferring its heat to the entering liquid. In the same way, the new condenser is in the same condition that the recovery unit was in previously, which has been thermally discharging after having been cooled by the passage of the supply liquid to the system, with a temperature in the lower part close to that of the liquid intake through (6) by which it may efficiently condense the water vapour coming from the evaporator (1). This role switching is one of the most noteworthy elements of the device in the invention

The efficiency of the device in the invention will depend mainly on:
- The temperature set as a reference in the heater (8) and the working pressure: the higher it is, the greater the efficiency and, if working with brines, the more salt deposits in the filling of the evaporator (1)
- The closer the temperatures in the upper part of the condenser (2) and the recovery unit (3) are to that set in the heater (8) and the temperatures of the lower part of the condenser (2) and the recovery unit (3) at the brine intake through (6): The closer they are, the greater the efficiency.
- The temperature and flow of the liquid at the exit of the evaporator (1): The lower they are, the greater the efficiency
- The temperature of the distillate produced: The lower it is, the greater the efficiency

The criterion for designing the beds for efficient operation, taking into account the flows of liquid to be treated and the corresponding flows of air (or another gas) is therefore:
- Sizing the evaporator (1) with enough thermal capacity so that the thermal wave caused by hot liquid at the intake does not reach the end of the evaporator (1) and the temperature at the lower part of the evaporator (1) is kept low with the expected variations of the flows of hot liquid which descend and get cooler, giving off heat to the filling and the air (or another gas), increasing its temperature and increasing the amount of water vapour that it contains.
- Sizing of the condenser (2) and the recovery unit (3) with sufficient thermal capacity for the role switching of the condenser (2) and recovery unit (3), and vice versa, (to occur when the thermal wave caused by the entry of residual heat in the upper part of the condenser (2) starts to reach the lower part of the condenser (2)), to occur with a reasonable frequency (e.g. every 2-3 hours) and to ensure recovery of almost all the condensed liquid
- Sizing of the three beds to guarantee a suitable heat and mass transfer, which depends, among other things, on the speeds of the air (or the gas) and the liquid inside the bed.

Even though the system in the invention can work with multiple non-adsorbent filling materials (or materials in which adsorption does not have a dominant effect), it is recommended to use materials with a high value of the product of density and specific heat, small fraction of voids, low cost, local availability and resistance to temperature and salt corrosion or other kinds of corrosion. Therefore, the use of rocks (pebbles, granite, etc.) available locally is an excellent (though not the only) choice: It allows us to work with high temperatures and pressures without saline incrustations (if working with brines) presenting a big problem, and because its cost is very low, it can be sized generously to be able to work with significant thermal differences between the upper and lower part of the fillings of the evaporator (1), the condenser (2), and the recovery unit (3)

The use of packed beds as evaporators/humidifiers is quite common both in HDH applications (humidification-dehumidification) for desalination as well as in other applications (e.g. cooling towers in thermal power stations), normally using plastic filling materials with a big void fraction to minimize air pressure drop (or gas) through the bed and reduce the weight. The system in the invention can use these types of bed fillings in the evaporator (1), but using non-adsorbent materials, with a high value for the product of density and specific heat, fractions of voids in the bed around 33%, and low cost; furthermore, the bed, as an evaporator, operates as an efficient and low-cost accumulation system, which is especially interesting if you want to use solar heat (by itself or as a main contributor) to provide the energy necessary for the process (it must be taken into account that it is always possible to hybridize the solar system with another heat-producing system with renewables or with conventional fuels to maintain a constant production process).

The system in the invention used for desalination can be considered an improvement on HDH desalination systems. In order to optimize the efficiency of any HDH desalination system, the basic criterion found in literature is the thermodynamic balance of flows of air (or gas) with water vapour and liquid. In the system in the invention, this balance is achieved naturally without needing to make extractions/injections of water vapour or liquid between the evaporator and the condenser as proposed in multiple HDH systems, thanks to the coupling caused by the direct exchange between the thermal behaviour of the solid and the fluid, both in the evaporator (1) and in the condenser (2), and due to the great thermal stratification between the upper part of the bed and the lower part of the bed, which is increased if using filling materials with a high thermal inertia and low thermal conductivity.

Using filling materials with a reduced tendency towards saline incrustations, even at high temperatures, allows the system in the invention to be used to work at very high saline concentrations, reducing saline rejection and being able to be connected to handle saline rejection from other desalination systems, such as reverse osmosis, and to obtain and achieve very concentrated solutions as a product, such as lithium salts.

### APPLICATION: COOLING AND OTHER ABSORPTION PROCESSES

An application in which the system in the invention is used in a way similar to that described for desalination is for absorption cooling production and, in general, for any application in which a solution goes through a process during which it increases its concentration of salt dissolved when applying heat (desorbing the solvent) and decreases its concentration when the solution comes into contact with the water vapour of the solvent (absorbing the solvent).

In a conventional single-effect absorption machine, for example, a diluted and cold solution of, for example, lithium bromide, is heated by applying heat in the so-called Generator at reduced pressure, desorbing water vapour and thus concentrating the solution. The water vapour generated in the Generator is transferred to a Condenser at the same pressure, where heat is dispelled to the exterior, (condensing the water vapour and producing liquid water). The liquid water produced in the Condenser expands towards a low-pressure zone, called the Evaporator, cooling to around 4°C and producing water vapour at low pressure when taking the heat from the refrigerator. This low-pressure water vapour is transferred towards the Absorber where it comes into contact with the concentrated solution produced in the Generator, after expanding towards the low-pressure zone, which absorbs the water vapour, thus diluting the solution and generating heat which is needed to be dispelled to the exterior. This diluted low-pressure solution is sent from the Absorber to the Generator by a pump, which increases its pressure, to start the absorption/desorption process all over again. In order to improve the efficiency of the absorption cycle, typically a heat exchanger is used between the cold diluted brine coming from the Absorber which goes to the Generator and the hot concentrated solution coming from the Generator which goes to the Absorber. To summarise the function of the absorption machine, we achieve cooling in the evaporator by introducing heat into the generator and dissipating heat in the condenser and the absorber. In order to measure the thermal efficiency of this type of cooling production machines, we use the term COP (Coefficient of Performance, the ratio between the cooling produced in the evaporator and the external heat applied in the Generator), which in single-effect machines tends to be around 0.7, far below the thermodynamic limit, and likewise far below that achieved by cooling production machines using mechanical compression which tend to have a COP of over 3.

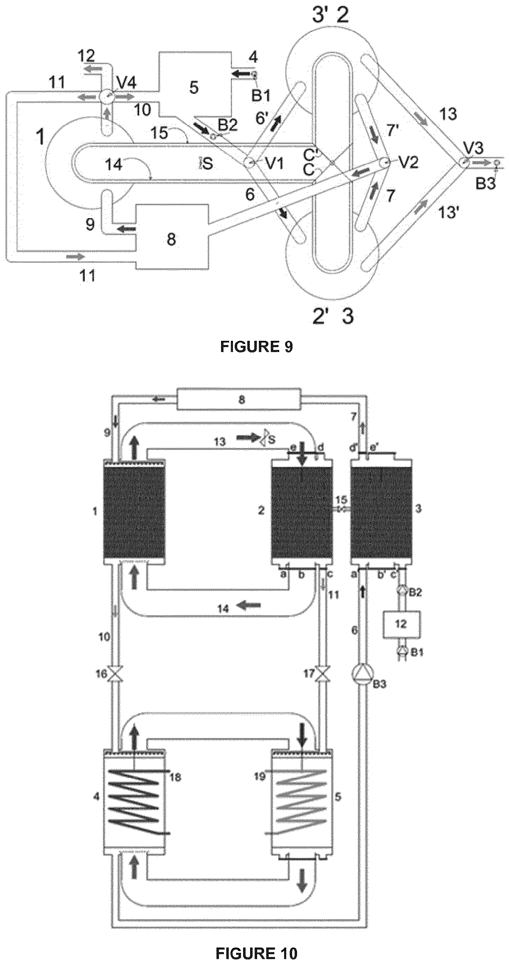

In Figure 10, we show the system in the invention applied to cooling production (or to a similar application) using water vapour (or humid air or a gas with vapour) and concentrated and diluted solutions of, for example, lithium bromide. This application uses three (or two) packed beds with non-adsorbent materials (in a similar way to the case of desalination as described above, to carry out the functions of Generator, Condenser and Condensation heat recovery unit connected to an Evaporator and to an Absorber at low pressure similar to those used in a conventional absorption machine. The numbers in Figure 10 refer to the different pieces of equipment
1. Water vapour generator, concentrating and heating the solution (e.g. of lithium bromide) and producing water vapour. It may not be a packed bed
2. Condenser of water vapour produced in the Generator: Packed bed collecting residual heat
3. Residual heat recovery unit (e.g. in the condenser) for use as a pre-heater of the generator (1). Packed bed to take advantage of the enthalpy of the residual heat collected by (2) to pre-heat the fluid that it feeds into (1).
4. Low-pressure absorber: Where the concentrated solution becomes diluted when absorbing the water vapour generated in the low-pressure evaporator
5. Low-pressure evaporator: The condensate produced in (2) evaporates at low pressure, collecting the heat from the refrigeration 19
6. Entry of the diluted solution into the Recovery Unit (3)
7. Exit of the diluted solution from the Recovery Unit (3) and sent to the heater (8) to be reheated
8. Diluted solution heater
9. Entry of the hot, diluted solution into the Generator (1)
10. Exit of the concentrated solution from the Generator (1)
11. Exit of the distillate from the Condenser (2)
12. Auxiliary tank
13. Piping hot water vapour (or air or gas with vapour) with a high water vapour flow from the generator (1) to the condenser (2).
14. Piping of cool water vapour (or air or gas with vapour) with a low water vapour flow from the condenser (2) to the generator (1). It may not be necessary.
15. Valve, or system, to transfer the solution between the Condenser (2) and the Recovery Unit (3) at the moment of their role switching
16. Expansion valve for the concentrated solution
17. Expansion value for the distillate produced in (2)
18. Dissipation of the heat generated in the absorber
19. Refrigeration

In the system in the invention, a cold diluted solution of, for example, lithium bromide, is heated by applying heat in (8), entering into the Generator (1) and producing water vapour which is transferred to the condenser (2) (e.g. if there is piping (14), providing it to a flow of humid air or gas which circulates countercurrently with the solution between the Generator (1) and the Condenser (2)). In the Generator (1), the solution is concentrated, producing water vapour (since the content of the water vapour reaches a state in balance with the concentration and temperature of the solution in each zone of the generator) upon desorbing water vapour from the solution, so that while the solution passes through the generator and becomes concentrated (and, ideally, cools), the amount of water vapour that passes through it increases. The water vapour (or humid air or gas) is transferred to a Condenser via the blower (S), where the water vapour condenses and produces liquid water. The flow of hot water vapour (alone or as part of the flow of air or of another gas) with a high water vapour content coming from the generator (1) will lose water vapour and temperature in contact with the filling material of the condenser (2) in the same way described in the aforementioned Thesis. The liquid condensed over the filling and which by gravity reaches the bottom of the condenser (2) is extracted from the system through (11) and is introduced, after expanding in (17), into the evaporator (5) where it evaporates taking the heat from the refrigeration (19) (cooling to typically 4°C), passing the water vapour created into the absorber (4). The cooled concentrated solution that comes out of the Generator (1) is piped through (10) to expand in (16) and enter into the absorber (4), where the heat generated in absorbing the water vapour arriving from the evaporator (5) dissipates in (18). The resulting diluted low-pressure solution is sent, using a B3 pump which increases its pressure, through (6) to the recovery unit (3) where it is pre-heated before entering into the heater (8) and being introduced into the generator (1), starting the absorption/desorption process all over again.

The recovery unit (3) being able to preheat the solution is due to the fact that the condenser (2) and the recovery unit (3) switch their roles when the temperature evolution in the lower part of the condenser is such that the amount set as an operation criterion climbs above the intake temperature of the solution through (6). This switch is carried out using a set of 3-way hatch valves (or the like) through which the connections (a), (b), (c), (d) and (e) of the condenser (2) switch their function with (a'), (b'), (c'), (d') and (e') of the recovery unit (3). The movement of fluids takes place mainly through the hydraulic groups of pumps: B1 supplying the auxiliary tank (5), B2 filling the recovery unit (3), and B3 feeding the recovery unit (3), and through the blower S, in the pipe (13) to circulate the water vapour (or the air or another gas with vapour) between the condenser (2) and the generator (1). The pump groups B1 and B2 may also be used during the role switching between beds to facilitate the transfer of the solution between the pre-heater and the condenser and to improve heat recovery. If the pressure difference between the generator and the condenser, which is generated by the condensation, is sufficient, blower S may not be necessary.

When the change occurs, the new recovery unit is in the same condition that the condenser was in previously, with a temperature in the upper part close to that set in the heater (8) and a temperature in the lower part close to that of the liquid intake through (6) which it can pre-heat, transferring its heat to the entering liquid. In the same way, the new condenser is in the same condition that the recovery unit was in previously, which has been thermally discharging after having been cooled by the passage of supply liquid to the system, with a temperature in the lower part close to that of the liquid intake through (6) with which it may efficiently condense the water vapour coming from the generator (1). This switching of roles is one of the most noteworthy elements of the system in the invention. In fact, the substantial difference between the system in the invention and a conventional absorption machine is that in the system in the invention not all the heat collected in the condenser (2) is dissipated to the exterior, but rather it is recovered for pre-heating the solution before it enters into the Generator (1) so the COP may surpass the value of 3.

The efficiency of the system in the invention will depend mainly on:
- The default temperature set in the heater (8) and the working pressure: the higher they are, the greater the efficiency
- The closer the temperatures in the upper part of the condenser (2) and the recovery unit (3) are to that set in the heater (8) and the temperatures of the lower part of the condenser (2) and the recovery unit (3) at the brine intake through (6):

The closer they are, the greater the efficiency.
- The temperature and flow of the liquid at the exit of the evaporator (1): The lower they are, the greater the efficiency
- The temperature of the distillate produced: The lower it is, the greater the efficiency

The criteria for designing the beds for efficient performance for this application are similar to those applicable for use in applications of desalination and described above.

### APPLICATION: GENERATION OF MECHANICAL POWER

One of the applications with the greatest potential for the system in the invention is the generation of mechanical power. Most of the systems which are used to generate mechanical power with heat sources are based on using thermodynamic cycles working in a somewhat stationary regime between two reservoirs at clearly differing temperatures, taking heat from the so-called Hot Reservoir at high pressure, creating mechanical work during the expansion of the working fluid (normally vapour from water, gas or organic fluids) and transferring residual heat to the so-called Cold Reservoir at low pressure. The traditional methods of improving the conversion efficiencies of thermal energy to mechanical power are:
- Increase the pressure and/or temperature of the hot reservoir
- Reduce the temperature of the cold reservoir
- Recover part of the residual heat

The multiple systems to increase the efficiency of conventional systems for generating mechanical power by making the most of residual heat include, for example:
- The Rankine cycle with reheating: It is a cycle used in steam turbines. It uses a descending scale of pressures and temperatures. After expanding the steam at high temperature in a high-pressure turbine, it is reheated to then be expanded again in a lower-pressure turbine. The typical efficiency (ratio between the mechanical power produced and the energy extracted from the hot reservoir) for the production of mechanical power with this cycle is around 40%.
- Rankine Cycle with regeneration: It is also a cycle used in steam turbines. The water is pre-heated and then enters into the Hot Reservoir with one or multiple steam extractions or bleedings from the turbine at pressures such that the saturation temperature is intermediate between the condensation temperature in the Cold Reservoir and the saturation temperature at the pressure of the Hot Reservoir. When there are multiple extractions, the extraction temperatures are normally phased with equidistant leaps. The typical efficiency for the production of mechanical energy with this cycle tends to surpass 40%.

- The Combined Cycle: The escape gases from a gas turbine, or a combustion engine, are used to thermally feed a steam cycle recovery boiler. An efficiency of over 60% can be obtained by using this cycle for generating mechanical power
- The Stirling cycle is a closed regenerative cycle with a permanent gaseous fluid, where the closed cycle is defined as a thermodynamic system in which the fluid is permanently contained within the system, and regenerative describes the use of a specific type of heat exchange and thermal storage, known as the regenerator. The regenerator is an internal heat exchanger which has the function of absorbing and giving off heat in the evolutions at a constant volume in the cycle. The regenerator consists of a porous medium with negligible thermal conductivity that contains a fluid. The regenerator divides the motor into two zones: a hot zone and a cold zone. The fluid moves from the hot zone to the cold zone during the different working cycles, passing through the regenerator. Stirling motors have a high efficiency and are the only ones capable of coming close to Carnot's maximum theoretical efficiency
- Cogeneration: Thermal use of residual heat in a power cycle whether from the heat given off in the condenser, from the escape gases of a motor or turbine, or from the refrigeration of the lubricant of a motor. With cogeneration for generating mechanical and thermal power, the global efficiency (ratio of useful, thermal and mechanical energy, divided by the energy consumed in the hot reservoir) can exceed 85%.

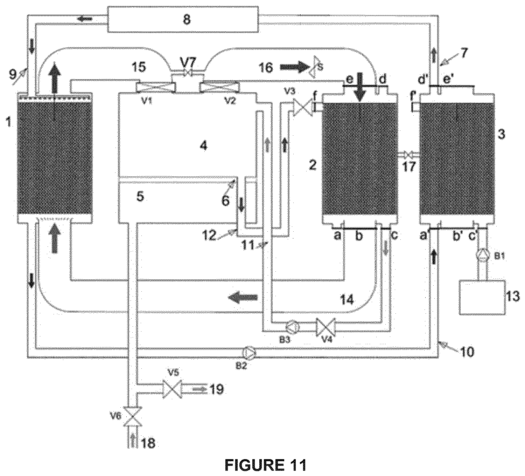

In the system in the invention for this application of generating mechanical power using the sequential and reciprocating action of a set of packed beds with not significantly adsorbent materials, mechanical power is generated by raising the pressure of a liquid, which we will call the working liquid, to be subsequently expanded to move a piston, turn a turbine, pump a fluid or perform any other mechanical function. In the system in the invention, an auxiliary fluid is used, the same one or a different one from the liquid whose pressure we want to increase, in a liquid phase (which we will simply call liquid) and in the form of steam (whenever the word steam or vapour is used in this text we are referring to the vapour from the auxiliary fluid), alone or as part of a flow of gas (e.g. air) which transports it, and some packed beds. In the system in the invention applied to the generation of mechanical power, two pressure zones are identified (see Figure 11), one which is always at high pressure and another which, depending on the position of the valves, will have high or low pressure. The numbers and letters in Figure 11 refer to the different pieces of equipment
1. Steam/vapour generator. It may not be a packed bed
2. Residual heat collector: Packed bed acting as a Condenser of vapour/steam created in the Generator (1).
3. Residual heat recovery unit (e.g. in the condenser) for use as a pre-heater of the generator (1). Packed bed to take advantage of the enthalpy of the residual heat collected by (2) to pre-heat the fluid that it feeds into (1).
4. Expansion/compression chamber for the vapour/steam produced in the Generator (1).
5. Expansion/compression chamber for the working liquid
6. Mobile separator piston which separates the vapour chamber (4) from the working liquid chamber (5)
7. Exit of the auxiliary liquid pre-heated in the Recovery Unit (3) and sent to the heater (8) to be reheated
8. Auxiliary liquid heater
9. Entry of heated auxiliary liquid into the Generator (1)
10. Exit of non-evaporated liquid from the Generator (1) and sent to the Recovery Unit (3)
11. Exit of hot condensate from the chamber (4)
12. Exit of cold condensate from the condenser (2)
13. Auxiliary tank
14. Piping with low flow of vapour (or air or gas with vapour) and cool, from the condenser (2) to the generator (1)
15. Piping with high flow of vapour (or air or gas with vapour) and hot, from the generator (1) to the vapour chamber (4)
16. Piping with high flow of vapour (or air or gas with vapour) and hot, from the vapour chamber (4) to the condenser (2)
17. Valve, or system, to transfer the auxiliary liquid between the Condenser (2) and the Recovery Unit (3) at the moment of their role switching
18. Tubing and valve for sucking the working liquid into the chamber (5)
19. Tubing and valve for expelling the working liquid from the chamber (5)
   - V1: Connection valve/cut-off for vapour between the generator (1) and the vapour chamber (4)
   - V2: Connection valve/cut-off for vapour between the vapour chamber (4) and the residual heat collector (2)
   - V3: Connection valve/cut-off for liquid between the vapour chamber (4) and the upper part of the residual heat collector (2)
   - V4: Connection valve/cut-offfor liquid between the lower part of the residual heat collector (2) and the vapour chamber (4)
   - V5: Valve for expelling the working liquid from the chamber (5)
   - V6: Valve for sucking the working liquid into the chamber (5)
   - V7: Bypass valve of the vapour chamber (4) between the Generator (1) and the residual heat collector (2)
   - S: Blower to recirculate vapour (or air or gas with vapour) between the Generator (1) and the Residual Heat Recovery Unit (2), passing (or not, if V7 is open and V1 and V2 are closed) through the vapour chamber (4)
   - B1: Liquid supply pump from the auxiliary tank (13) to the Residual Heat Recovery Unit (3)
   - B2: Auxiliary liquid recirculating pump between the Generator (1), the residual heat recovery unit (2) and the heater (8)
   - B3: Pump for injecting the condensate formed in the residual heat recovery unit (2) into the vapour chamber (4)

The zone which will is always at high pressure uses, as auxiliary fluids, vapour (or air or gas with vapour) (e.g. from water) and a liquid (e.g. water) and two or three packed beds with non-adsorbent materials (in a similar way to the cases of desalination and absorption as described before), to carry out the functions of Generator (1), Condenser (2) and Recovery Unit (3) of the heat from condensation. The zone with variable pressure is formed by the vapour expansion/compression chamber (4) and the working liquid (e.g. water) expansion/compression chamber (5) which balance their pressures using the piston (6).

Coming from the vapour chamber (4) at low pressure, cold and with a minimum volume, and with the liquid chamber (5) at low pressure, cold and with a maximum volume, and with valves V1, V2, V3, V4, V5 and V7 closed and V6 open, the increase in pressure in the vapour chambers (4) and the working liquid chamber (5) occurs by closing valve V6 and opening valves V1, V2, V3 and V5 (keeping V4 and V7 closed), to connect the vapour chamber to the high-pressure zone, so that the vapour (or air or gas with vapour) generated in the Generator (1) is transferred via piping (15) to the vapour chamber (4), heating it and increasing its pressure, thus displacing the separator (6) between the vapour (4) and liquid chambers (5) and increasing the pressure of the working liquid in the liquid chamber (5), expelling the working liquid at high pressure through the piping (19) and the valve (V5) and sending it to the process in which its mechanical power is used, expelling it or not from the system. When the vapour enters the vapour chamber (4), it heats up when part of the vapour condenses in the initially cold chamber until it reaches a pressure and temperature close to those of the output of the generator (1). The condensed liquid in (4) is sent to the condenser (2) through valve V3 and the piping (12), connected to the separator piston (6) using, for example, a flexible or telescopic connection, to the upper part of the condenser (2). The non-condensed vapour is transferred from the vapour chamber (4) to the Condenser (2) via the blower (S) through the piping (16), where the vapour condenses, and the liquid is produced (e.g. liquid water).

When the piston (6) reaches the limit of its run, with the vapour chamber (4) at high pressure, hot and with a maximum volume, with the liquid chamber (5) at high pressure, hot and with a minimum volume, and with valves V1, V2, V3 and V5 open and V4 and V6 closed, the reduction in pressure in the vapour (4) and liquid chambers (5), with the subsequent recharging of the system with the cold working liquid at the starting pressure, occurs by closing valve V1, V2, V3 and V5 and opening valves V4 and V6 (V7 shall remain closed due to it not being necessary to bypass the vapour chamber), so that cold liquid is introduced, with or without the aid of a pump, coming from the lower part of the condenser in the vapour chamber, cooling it, and reducing the pressure (cooling it and therefore reducing the pressure until it comes into balance with the temperature of the liquid coming from the condenser (2), moving the piston (6) and decreasing the pressure of the working liquid in the liquid chamber (5), collecting cold, low-pressure working liquid through valve V6 pushed by the minimum pressure available in the working liquid, for example atmospheric pressure for pumping systems.

In the zone that is always at high pressure, the auxiliary liquid is heated by applying heat to the Heater (8) and introducing it into the Generator (1) where the vapour is created (e.g. countercurrently to a flow of vapour (or air or gas with vapour) which circulates between the Generator (1) and the Residual Heat Recovery Unit (2), if piping exists (14)), which passes through the vapour chamber (4) in the vapour expansion phase. In the Generator (1), the liquid is spread out over the filling, producing vapour at the high pressure of the Generator (1) and allowing the vapour (or air or another gas with vapour) to reach a state of balance with its vapour content in each area of the bed, so that when crossing the bed the liquid cools in its path towards the lower part of the Generator (1) and the flow of vapour (alone or included in the flow of air or gas with vapour) and its temperature increases in its path towards the upper part of the Generator (1). The liquid that exits the Generator (1) without evaporating is directed through (10) to the lower part of the Recovery Unit (3) where it is pre-heated by passing through it before entering into the heater (8) through the piping (7) to then be introduced in the upper part of the Generator (1) and start the cycle again.

Continuing in the high-pressure zone, the high flow of hot vapour (or air or another gas with vapour) coming from the generator (1) and from the vapour chamber (4) will lose vapour and temperature in contact with the filling material of the Residual Heat Recovery Unit (condenser) (2), heating it in the same way described in the aforementioned Thesis. The liquid condensed over the filling of the Condenser (2), which by gravity arrives cold to the bottom of the condenser (2), is extracted from the system through (11) when it is desired to cool the vapour chamber (4). As we stated, the liquid that exits the lower part of the Generator (1) is pre-heated in the Recovery Unit (3). The recovery unit (3) being able to preheat the liquid is due to the fact that the condenser (2) and the recovery unit (3) switch their roles when the temperature evolution in the lower part of the condenser is such that it rises above the temperature set as an operation criterion. This change is carried out using a set of 3-way hatch valves (or the like) through which the connections (a), (b), (c), (d), (e) and (f) of the condenser (2) switch their function with (a'), (b'), (c'), (d'), (e') and (f) of the recovery unit (3). The movement of liquid takes place mainly through the hydraulic groups of pumps: B1 supplying the auxiliary tank (13), B2 supplying the recovery unit (3) from the generator (1), and B3 circulating the condensate produced in the Condenser (2), and through the blower S, located in the pipe (14), (15) or (16) as it may apply, to circulate the vapour (or air or another gas with vapour) between the condenser (2), the generator (1) and the vapour chamber (4). The pump groups B1 and B2 may also be used during the role switching between beds to facilitate the transfer of the solution between the pre-heater and the condenser and to improve heat recovery. If the pressure difference between the generator and the condenser, which is generated by the condensation, is sufficient, blower S may not be necessary.

When the change occurs, the new recovery unit is in the same condition that the condenser was in previously, with a temperature in the upper part close to that set in the heater (8) and a temperature in the lower part close to that of the liquid intake through (6) which it can pre-heat, transferring its heat to the entering liquid. In the same way, the new condenser is in the same conditions that the recovery unit was in previously, which has been thermally discharging after having been cooled through the passage of supply liquid to the system, with a temperature in the lower part close to that of the liquid intake through (10) with which it may efficiently condense the vapour coming from the generator (1). This switching of roles is one of the most noteworthy elements of the system in the invention. In fact, the substantial difference between the system in the invention and a conventional one is that in the system in the invention, the heat delivered to the condenser (2) is not dissipated to the exterior, but rather it is recovered for pre-heating the solution before it enters into the Generator (1), allowing the reachable efficiency to surpass that of conventional systems.

To understand how it is possible for the efficiency to be greater, we must take the following into account:
- The system in the invention does not work in a somewhat stationary regime as in the case of conventional systems for generating mechanical power using heat, due to the thermal inertia of the filling material of the beds.
- An intermediate gas (e.g. air) can be used to transport the vapour between the beds
- The vapour is created indirectly over the filling which is heated using the heated liquid and spread over the upper part of the bed generating vapour and pulled towards the condenser (e.g. by the gas which ascends through the bed)
- The recovery of the heat delivered to the Condenser (2) (Cold Reservoir) could be much greater
- The thermal stratification of the filled beds and the sequential operation with the role switching between the Condenser (2) and the Recovery Unit (3) means that the thermal level of the heat recovered may be very close to that of the hot reservoir in the heater (8)
- The work of compressing the vapour (or air or gas with vapour) can be done by the atmospheric pressure or the minimum pressure available in the working liquid

The efficiency of the system in the invention will depend mainly on:
- The default temperature set in the heater (8) and the working pressure: the higher they are, the greater the efficiency
- The closer the temperatures in the upper part of the condenser (2) and the recovery unit (3) are to that set in the heater (8) and the temperatures of the lower part of the condenser (2) and the recovery unit (3) at the liquid intake through (10): The closer they are, the greater the efficiency.
- The temperature and flow of the liquid at the exit of the evaporator (1): The lower they are, the greater the efficiency
- The temperature of the distillate produced: The lower it is, the greater the efficiency

The criteria for designing the beds for efficient performance for this application are similar to those applicable for use in other applications described before.

### BRIEF DESCRIPTION OF THE DRAWINGS

A set of drawings is included to complement the information contained in this document and to facilitate a better understanding of the invention's features. These are an integral part of the document in which, with an illustrative and non-limiting character, the following are shown:
In Figure 1 we show a schematic view of the system in the invention, for the application of drying, with the main constituent elements, working in operation mode 1.
In Figure 2 we show a schematic view of the system in the invention, for the application of drying, with the main constituent elements, working in operation mode 2.
In Figure 3 we show a schematic view of the system in the invention, for the application of drying, with the main constituent elements, working in operation mode 3.
Figures 4 and 5 show a detailed plan view from the top and from the bottom of the drying application in operation mode 1, and Figures 6 and 7 show a detailed plan view from the top and from the bottom of the drying application in operation mode 2, using a possible preferential embodiment of the invention for the case of a drying process with its various components, showing the system in the invention including the devices for switching roles between the residual heat collector (2) and the pre-heater (3) and the recovery of sensible heat from the process (1).
In Figures 4, 5, 6 and 7, the elements designated with lowercase letters refer to elements from Figures 1, 2 and 3, like those designated with numbers.
In Figure 8, we show a schematic view of the system in the invention for the desalination application, with the main constituent elements.
In Figure 9, we show a detailed plan view of a possible preferential embodiment of the object of the invention, for the desalination application, with its various components, showing the system in the invention including the devices for switching functions between the condenser (2) and the recovery unit (3). In Figure 9, the elements designated with lower case letters refer to the elements in Figure 8, like those designated with numbers.
In Figure 10, we show a schematic view of the system in the invention, for the application of cooling and other absorption processes, with the main constituent elements.
In Figure 11, we show a schematic view of the system in the invention for the mechanical power generation application, with the main constituent elements.

### PREFERENTIAL EMBODIMENT OF THE INVENTION

The system in the invention can be embodied in different ways, with different sizes and materials and in multiple applications. Below we show two preferential embodiments of the system in the invention: one for use in a drying application and another for use in a desalination application.

### APPLICATION: DRYING

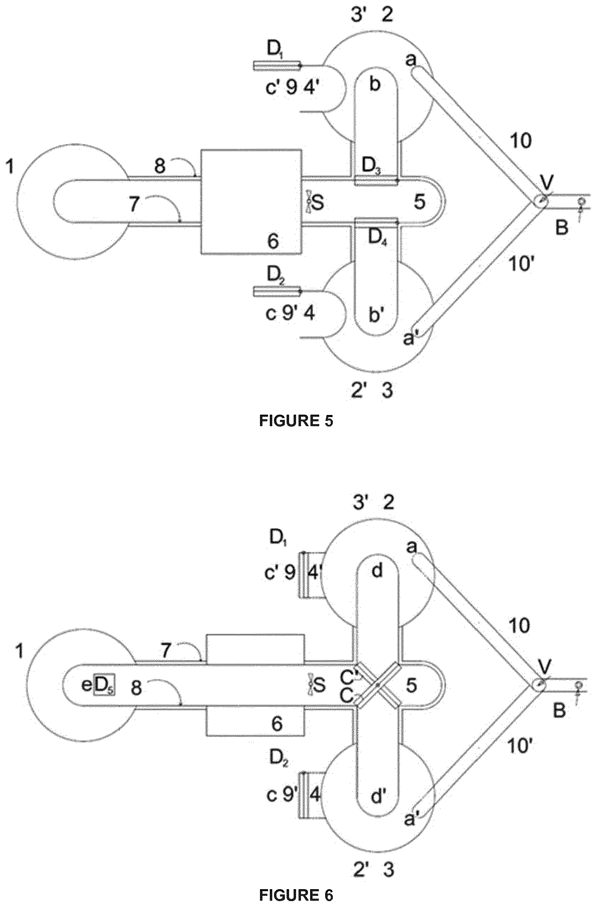

For the case of a drying process, Figures 4 and 5 show a detailed plan view from the top and from the bottom for operation mode 1, and Figures 6 and 7 show a detailed plan view from the top and from the bottom for operation mode 2, using a possible preferential embodiment of the invention with its various components and showing the system in the invention including the devices for switching roles between the residual heat collector (2) and the pre-heater (3) and the recovery of sensible heat from the dryer process (1). These figures show a possible preferential embodiment of the invention for dryers and with the same elements as in Figures 1, 2 and 3 (except for hatches f and g which are not necessary for this preferential embodiment) and a layout of piping and conduits including pumps B, blower S, hatches C, D1, D2, D3 and D4 and the 3-way valve V, used for operating the system.

### Running in operation mode 1,

- Blower S operates when it is desired to dry the product in the dryer (1).
- Pump B operates when it is desired to extract the distillate produced.
- The position of hatch C directs the air from the dryer (1) to the residual heat collector (2) and from the pre-heater (3) to the heater (6).
- Hatches D1 and D2 are open and allow for the entry of outside air into the pre-heater (3) and the exit of air from the residual heat collector (2)
- The position of hatches D3 and D4 allows for the air exiting the pre-heater (3) through the piping (5) reaches the heater (6) and prevents air from circulating through the openings (b) and (b').
- Hatch D5 remains closed
- The heater (6) receives the air through the pipe (5) and sends it warmer, at the designated temperature, through the pipe (7) to the dryer (1) if blower S is in operation.

For the role switching between the residual heat collector (2) and the pre-heater (3) to occur when the temperature in the lower part of the residual heat collector (2) reaches the set amount above that of the supply air to the pre-heater (3):
- Blower S is stopped and the residual heat collector (2) is emptied of its water with pump B.
- Hatch C changes position. When changing the position of hatch (C→C') located between the conduits (5) and (8), the pre-heater (3) becomes the new residual heat collector (3→2') and the air moves between the new residual heat collector (2') and the dryer (1)
- When the position of hatch C has changed, blower S is turned on and enters into the new normal operation mode

Operation mode 1 is maintained until reaching the humidity level desired at the output of the dryer (1); when it is reached, it moves into to operation mode 2. Running in operation mode 2,
- Blower S operates to cool the product in the dryer.
- The heater (6) is turned off
- The position of hatch C directs the air from the dryer (1) to the latter, which has acted as a pre-heater (3)
- While the output temperature of the pre-heater (3) is low enough to cool the product in the dryer (1),
   ∘ Hatches D1 and D2 are closed and prevent the entry of outside air into the pre-heater (3) and the output from the residual heat collector (2)
   ∘ The position of hatches D3 and D4 prevents the air exiting the pre-heater (3) through the pipe (5) from reaching the heater (6) and prevents air from circulating through the opening (b) and allows air to circulate through the openings (b').
- If the output temperature of the pre-heater (3) is not low enough to cool the product in the dryer (1), air from the exterior will be taken (opening the passage, for example, through hatches D1 and D3) and after circulating it through the dryer (1), it will be expelled outside through opening D5 after the dryer, in pipe (8)
- The dryer (1) receives the cold air from the pre-heater (3) or from the exterior through the pipe (7), if blower S is in operation.

Both in operation mode 1 and 2, if it is desired to add part or all of the energy with a solar installation, or another with intermittent availability, it is possible, among other options, to heat the air at the output of the dryer.

Packed beds with non-adsorbent materials with the preferential embodiment shown in Figure 4, 5, 6 and 7 can be built with solids (e.g. rocks) of a uniform size and preferably with a diameter about 20 times less than the equivalent diameter of the container. The container shall be thermally insulated, and it can be manufactured from a material capable of withstanding the working pressure (or be contained in another container which supports it, such as the ground itself if it is buried) and temperature (e.g. polypropylene, steel, etc.), and, apart from the filling, a lower plenum/diffuser can be used and another higher one, or other similar devices, for the appropriate distribution of the air. The sizing of the packed beds will depend on the demand for dry product to be processed and the desired operation modes and can vary between a few litres up to many thousands of m³. The equipment for moving and controlling the fluids will be selected to withstand the working conditions (e.g. temperature, pressure, pressure drop, etc.)

It should be highlighted that by changing the working fluids (air for any gas and water for any liquid) and maintaining the general concept, there are an enormous number of applications in which the system in the invention can be used and a large number of embodiments can be shown which are essentially identical to the preferential embodiment described in this section.

### APPLICATION: DESALINATION OF SEAWATER

For the case of a seawater desalination process, in Figure 9 we show a possible preferential embodiment of the invention for the desalination of seawater and with the same elements as Figure 8 and a layout of pipes and conduits in which we can see pumps B1, B2 and B3, blower S, hatch C and 3-way valves V1, V2, V3, 4-way valve V4, and 2 hatches C, used for operating the system.

In normal operations,
- Pump B1 is switched on to maintain the desired level in the auxiliary tank (5), while it is desired to produce water.
- Pump B2 operates when it is desired to produce water.
- Pump B3 operates when it is desired to extract the distillate produced.
- Blower S operates when it is desired to produce water.
- The position of hatch C directs the air towards and from the condenser.
- Valves V1, V2 and V3 direct the water through the pipes (6), (7) and (13).
- The heater (8) receives the water through the pipe (7) and sends it warmer, at the designated temperature, through the pipe (9) to the generator (1), if B2 is in operation.
- Depending on the operation mode desired, valve V4 directs the output of concentrated brine from the generator (1) to the pipes (10), (11) or (12).
   ∘ Basic mode: the concentrated brine recirculates through the pipe (10) through the auxiliary tank (5), through the heat recovery unit (3), the heater (8) and the generator (1). This operation mode shall be maintained as long as the saline brine concentration does not reach the maximum set level and the thermal level of the generator (1) is sufficient.
   ∘ Preparation mode: The brine recirculates directly through the pipe (11) and the heater (8) to the generator (1). This operation mode will be used for starting up the system or when the thermal level of the generator (1) is not sufficient.
   ∘ Purge mode: the concentrated brine is expelled to the exterior through the pipe (12). This operation mode shall be maintained as long as the saline brine concentration is higher than the maximum set level

For the role switching between the condenser (2) and the recovery unit (3) to occur when the temperature in the lower part of the condenser (2) reaches the set amount above that of the supply to the recovery unit (3):
- Pump B2 and blower S are stopped and the condenser (3) is emptied of water.
- Pump B3 is stopped and valves V1, V2 and V3 and hatch C change positions.
   ∘ In the water circuit, when valves V1, V2 and V3 change positions, the condenser (2) becomes the new recovery unit (2→3') and the recovery unit becomes the new condenser (3→2') since the function of the pipes (6), (7) and (13) is carried out by the pipes (6'), (7') and (13'), respectively
   ∘ In the air circuit, when the hatches (C→C') change positions, one located in conduit (14) and the other in conduit (15), the recovery unit (3) becomes the new condenser (3→2') and the air moves between the new condenser (2') and the generator (1)
- The recovery unit (3) empties through gravity, since pump B2 allows water to descend into the auxiliary tank (5) while stopped, sized accordingly.
- When the recovery unit (3) is emptied, pumps B2 and B3 and blower S switch on and the new normal operation mode starts up

The packed beds with non-adsorbent materials in the preferential embodiment shown in Figure 2 can be built with rocks of a uniform size and with a diameter about 20 times less than the equivalent diameter of the container. The container will be thermally insulated, and it can be manufactured in a plastic material capable of withstanding the working pressure (or be placed in another container that withstands it, such as the ground itself if it is buried) and temperature (e.g. polypropylene), and in addition to the filling, it will have a lower plenum/diffuser and another upper one for a suitable distribution of the liquid and/or air. The sizing of the packed beds with non-adsorbent materials will depend on the demand for water to be provided and the desired operation modes and can vary between a few m³ up to many thousands of m³.

The equipment for moving and controlling the fluids will be selected to withstand the working conditions (e.g. temperature, salinity, pressure, pressure drop, etc.)

It should be highlighted that by changing the working fluids (air for any gas and salt water for any solution of a solid or a liquid in another less volatile liquid), and maintaining the general concept, there are an enormous number of applications in which the system in the invention can be used and a large number of embodiments can be shown which are essentially identical to the preferential embodiment described in this section.

### Industrial application

The industrial application of the system in the invention is inherent to the nature of the invention and can be deduced from its explanation.

## Claims

1. Heat recovery system in thermal processes using sequential and reciprocating action of a set of packed beds with non-adsorbent materials (or in which adsorption does not have a dominant effect) which act alternately as a residual heat collector and as a pre-heater for the residual heat generator (or another external process), which can also be a packed bed.

2. System according to claim 1, for residual heat recovery in thermal processes (such as that generated during drying, the manufacturing/production of various products or the ventilation/dissipation of heat generated in buildings), **characterized by** how the enthalpy of the residual heat produced in the generator process (1) and extracted from (1) through a heat-carrier fluid is recovered, and to that end **characterized by** how it uses a set of blowers (S) and/or pumps (B), a set of conduits, valves and hatches, a heater (6), and two beds filled with solid materials, the first acting as a residual heat collector (2) receiving the heat-carrier fluid coming from the generator process (1), and the second acting as a recovery unit and pre-heater (3) of the heat-carrier fluid before entering the process (1) which generated the residual heat or to another external process. The numbers and letters in this claim refer to those indicated in Figures 1 to 7.

3. System according to claim 1, for the desalination of salt water (or the concentration of liquid solutions, salty effluents or contaminates) **characterized by** how it uses a process of evaporation of liquid in the air, or in another gas, and subsequently condensation, with heat recovery, from the vapour contained in the air, or in the gas, and **characterized by** how it uses a set of blowers (S) and/or pumps (B), a set of conduits, valves and hatches, a heater (8), and three beds filled with solid materials, which act as a generator/evaporator (1) of the liquid and vapour enricher in the air (or gas), residual heat collector/condenser (2) of the vapour and pre-heater/recovery unit (3) of the heat from the condensation to pre-heat the liquid that enters into (1). The numbers and letters in this claim refer to those indicated in Figures 8 and 9.

4. System according to claim 1, for absorption cooling production, or another absorption processes, **characterized by** how it uses a set of blowers (S) and/or pumps (B), a set of conduits, valves and hatches, a heater (8), a vapour Generator (1) using a process with desorption of previously absorbed vapour through a solution (e.g. aqueous solution of lithium bromide), which may be a packed bed with solid materials, and two packed beds with solid materials, which act alternately as a condenser/collector of residual heat (2) generated in (1), condensing the vapour desorbed, and as a pre-heater (3) for the solution with which the Generator (1) is supplied, recovering the heat previously collected when carrying out the function of residual heat collector (2). The numbers and letters in this claim refer to those indicated in Figure 10.

5. System according to claim 1, for the generation of mechanical power, **characterized by** how it uses vapour (or air or a gas with vapour) (e.g. from water), a liquid (e.g. water), a set of blowers (S) and/or pumps (B), a set of conduits, valves and hatches, a heater (8), a vapour chamber (4), a liquid chamber (5), and a separating piston (6), a vapour Generator (1), which may be a packed bed with solid materials, and two packed beds with solid materials, acting sequentially and alternately, as a residual heat collector/condenser (2) of the vapour generated in (1) and Pre-heater and Recovery Unit (3) of the condensation heat previously collected when it carries out the function of Collector (2), and **characterized by** how the vapour produced in the Generator (1) before passing to the residual heat collector (2) enters into the vapour expansion/compression chamber (4), acting on the mobile separating piston (6) and raising the pressure of a working liquid in the working liquid compression/expansion chamber (5), generates mechanical power in its subsequent expansion, when the vapour chamber (4) cools after becoming isolating from the Generator (1), upon introducing cold liquid coming from the Condenser (2), moving a plunger, turning a turbine, pumping a fluid or any other mechanical function. The numbers and letters in this claim refer to those indicated in Figure 11.

6. System according to claims 1, 2, 3, 4 or 5 **characterized by** how the residual heat collector (2) and the Pre-heater/Recovery Unit (3) switch roles when the residual heat collector (2) has been thermally charged, upon receiving the heat-carrier fluid which pulls the residual heat created in the process (1) using the blower (S), to the set thermal level. This change takes place cyclically every time that the role switching condition described is reached, by using a set of valves and hatches with activations embedded between them in such a way that, once activated, the residual heat collector (2) will begin to run as a new Pre-heater/Recovery Unit and the old Pre-heater/Recovery Unit (3) as the new Residual Heat Collector. In this way and with these operation cycles, the enthalpy collected by the residual heat collector (2) may be used to pre-heat the fluid which feeds the process (1), or another external process, when it acts as a Pre-heater (3).

7. System according to claims 1, 2, 3, 4 or 5, **characterized by** how the filling materials of beds (2) and (3) (and (1) if using a bed as a Generator) will not be significantly adsorbent and will preferably have physical properties such that the value of the product of the specific heat, its density, and the void fraction occupied by the solid in the bed is greater than 200 kilojoules per degree centigrade and cubic metre (kJ/C/m³), and can surpass 3000 kJ/C/m³, which means that it may act as energy storage for heat sources, intermittent or not, such as thermal solar installations and other sources of renewable or recovery heat.

8. System according to claims 1, 2, 3, 4 or 5 **characterized by** a capacity for recovering over 80% of the residual heat produced in (1), in the majority of cases.

9. System according to claim 3 **characterized by** being capable of working with saline concentrations above 80% of the saturation concentration of the salt in the liquid.
